**Europäisches Patentamt**

**European Patent Office**

**Office européen des brevets**

(19)

(11) Veröffentlichungsnummer: **0 000 135**
**A1**

(12) # EUROPÄISCHE PATENTANMELDUNG

(21) Anmeldenummer: 78100136.7

(22) Anmeldetag: 12.06.78

(51) Int. Cl.²: **F 24 J 3/04**, F 24 D 11/02,
F 01 K 17/00, F 02 C 7/34

(30) Priorität: 15.06.77 DE 2726924

(43) Veröffentlichungstag der Anmeldung:
10.01.79 Patentblatt 79/1

(84) Benannte Vertragsstaaten:
BE CH FR GB NL SE

(71) Anmelder: BROWN, BOVERI & CIE Aktiengesellschaft,
Kallstadter Strasse 1,
D-6800 Mannheim 41 (DE)

(72) Erfinder: Schüller, Karl-Heinz,
Daimlerstrasse 5,
D-6840 Lampertheim (DE)

(54) Anlage zur zentralen Erzeugung von thermischer Nutzenergie.

(57) Eine Anlage zur zentralen Erzeugung von thermischer Nutzenergie für die Fernversorgung von Verbrauchern (10) weist eine Turbine (16) auf, der ein oder mehrere Wärmetauscher (22, 23) nachgeschaltet sind. In diesen Wärmetauschern (22, 23) wird der für die Fernversorgung eingesetzte Wärmeträger erwärmt.

Um nun die mechanische Energie der Turbine (16) ebenfalls zur Erwärmung des Wärmeträgers einsetzen zu können, treibt die Turbine (16) eine Wärmepumpe (8) an, die der Umgebung Wärme entzieht, auf ein höheres Temperaturniveau anhebt und als Nutzwärme an den Wärmeträger abgibt. Hierdurch ist der Aufwand an Primärenergie geringer als bei einer direkten Erwärmung des Wärmeträgers allein durch Primärenergie.

1/3

Fig 1

EP 0 000 135 A1

Croydon Printing Company Ltd.

BROWN,BOVERI & CIE Aktiengesellschaft

Mannheim                              1. Juni 1978

Mp.-Nr. 578/77                        ZFE/P 1, Wg/Hz

## Anlage zur zentralen Erzeugung von thermischer Nutzenergie

Die Erfindung bezieht sich auf eine Anlage zur zentralen Erzeugung von thermischer Energie für die Fernversorgung von Verbrauchern mit wenigstens einer Turbine, insbesondere einer Gegendruckdampfturbine, der mindestens ein Wärmetauscher zur Abgabe von Nutzwärme an wenigstens einen Wärmeträger nachgeschaltet ist.

In bekannten Anlagen dieser Art, die als Fernheizkraftwerke mit Gas- oder Dampfturbinen ausgebildet sind, ist die Erzeugung von thermischer und mechanischer Nutzenergie gekoppelt, wodurch der hierzu erforderliche Aufwand an Primärenergie geringer ist als bei einer getrennten Erzeugung dieser Energiearten. Durch Generatoren, welche an die Turbine angeschlossen sind, wird die mechanische Nutzenergie in elektrische Energie umgeformt und Verbrauchern zugeleitet. Diesem Vorteil der Nutzenergieerzeugung mit verringertem Aufwand an Primärenergie stehen einige Nachteile gegenüber.

Dienen solche Anlagen in erster Linie zur Erzeugung von Nutzwärme und wird die hierbei erzeugte elektrische Energie in öffentliche Stromversorgungsnetze eingespeist, so ist für diese elektrische Energie in vielen Fällen kein kostendeckender Preis zu erreichen, so daß die Gesamtwirtschaftlichkeit einer solchen Anlage in Frage gestellt ist.

Um Betriebsstörungen zu begegnen, müssen schließlich noch Reserveeinheiten zur Stromversorgung vorgesehen sein, wodurch die Wirtschaftlichkeit weiter verringert wird.

Rüstet man andererseits Kraftwerke, die für die Erzeugung von elektrischer Energie vorgesehen und meist weitab von Wohngebieten aufgestellt sind, mit Zusatzeinrichtungen zur Erzeugung von Heizwärme aus, so muß diese Heizwärme über große Entfernungen zu den einzelnen Verbrauchern geleitet werden, wodurch hauptsächlich bei geringer Belastung und Kapazität erhebliche Kosten entstehen. Zudem ist bei vorgegebener Leistungsgröße der Wärmequelle des Kraftwerkes mit einer Verringerung der Stromerzeugung zu rechnen, so daß für die Ersatzstrombeschaffung zusätzliche Aufwendungen erforderlich sind, welche die Wirtschaftlichkeit
beeinflussen.

Der Hauptgrund für die Nachteile der bekannten Heizkraftwerke ist jedoch darin zu sehen, daß sich der
tageszeitlich und jahreszeitlich sehr schwankende
Bedarf an elektrischer und thermischer Nutzenergie
nicht deckt.

Der Erfindung liegt nun die Aufgabe zugrunde, eine
Anlage zur zentralen Erzeugung von thermischer Nutzenergie der eingangs genannten Art, insbesondere eine
Anlage zur Fernversorgung von Verbrauchern, anzugeben,
welche die thermodynamischen Vorteile der gekoppelten
Erzeugung von mechanischer und thermischer Nutzenergie zumindest weitgehend aufweist bei gleichzeitiger
Unabhängigkeit von der Erzeugung von elektrischer
Energie. Darüberhinaus soll die Anlage in ihrem Aufbau einfach und den betrieblichen Anforderungen voll
gewachsen sein.

Die Lösung dieser Aufgabe besteht bei einer Anlage
der eingangs genannten Art erfindungsgemäß darin,
daß die Turbine als Antrieb des Verdichters einer
die Umgebungswärme auf ein höheres Temperaturniveau
anhebenden und als Nutzwärme an den Wärmeträger abgebenden Wärmepumpe ausgebildet ist.

Die aus fossilen und/oder nuklearen Brennstoffen gewonnene und an ein Arbeitsmedium wie Dampf oder Treibgas übertragene Wärmeenergie wird in der Dampf- bzw.
Gas-Turbine in mechanische Antriebsenergie umgewandelt und zum Antrieb der Wärmepumpe ausgenutzt, wobei die von der Wärmepumpe auf ein höheres Temperaturniveau angehobene Umgebungswärme sowie mindestens die Abwärme der Turbine als Nutzwärme an den Wärmeträger abgegeben wird. Hierdurch sind die thermo- dynamischen Vorteile der gekoppelten Erzeugung von thermischer und mechanischer Nutzenergie gewahrt, gleichzeitig entfallen jedoch die mit einer Stromerzeugung verbundenen Nachteile, wie hoher Maschinen- und Bedienungsaufwand sowie die Probleme des Stromverkaufs der bekannten Anlagen gemäß dem Stand der Technik.

Da ein beachtlicher Teil der verbrauchten Primärenergie für die Deckung von thermischer Nutzenergie eingesetzt wird, gewinnt die Anlage gemäß der Erfindung wegen ihrer Wirtschaftlichkeit und ihres einfachen Aufbaus im Hinblick auf die Bestrebungen zur Energieeinsparung und Substitution hochwertiger fossiler Brennstoffe an Bedeutung.

Eine Anlage gemäß der Erfindung kann selbstverständlich auch mehrere, gegebenenfalls mehrstufige Verdichter aufweisen, ebenso können mehrere Wärmepumpen vorgesehen sein.

Als Wärmepumpe kann eines der bekannten Systeme mit Verdichter dienen, besonders vorteilhaft ist es jedoch, wenn die Wärmepumpe eine Entspannungsturbine aufweist, die an den als Turboverdichter ausgebildeten Verdichter gekuppelt ist und die über mindestens einen die Verdichtungwärme an den Wärmeträger abgebenden Wärmetauscher an die Druckseite des Verdichters angeschlossen ist. Durch die Entspannung des verdichteten Arbeitsmediums in der Entspannungsturbine und durch die Ausnutzung der hierbei gewonnenen mechanischen Energie für den Antrieb des Verdichters ist die von der Turbine zu liefernde Antriebsenergie verringert. Hierdurch kann die Turbine mit geringerer Leistung, d.h. billiger ausgebildet werden.

Gemäß einer Weiterbildung der Erfindung kann die Wärmepumpe einen geschlossenen Kreislauf für das Arbeitsmedium aufweisen mit wenigstens einem zwischen Entspannungsturbine und Verdichter in den Kreislauf eingeschalteten zweiten Wärmetauscher für die Zufuhr von Umgebungswärme. Als Arbeitsmedium kann hierbei ein Dampf z.B. Kältemittel oder ein Gas wie z.B. Kohlensäure oder Luft dienen.

Wird hierbei die Umgebungswärme einem Kälteträger entzogen, so kann die Anlage gleichzeitig zur Erzeugung von Nutzkälte eingesetzt werden.

Eine besonders empfehlenswerte andere Weiterbildung kann darin bestehen, daß die Wärmepumpe einen offenen Kreislauf für das Arbeitsmedium aufweist, wobei der Verdichter für die Ansaugung von Umgebungsluft ausgebildet ist und der Luftauslaß der Entspannungsturbine in die Umgebung mündet. Da hierbei die Umgebungswärme mit der angesaugten Umgebungsluft dem System zugeführt wird, ist kein Wärmetauscher für die Zufuhr von Umgebungswärme erforderlich und der Bauaufwand verringert.

Der Hauptvorteil der vorgenannten Ausbildung der Wärmepumpe ist jedoch darin zu sehen, daß hohe Wärmeträgertemperaturen bis in den Bereich um 100° C bei guter Leistungsziffer erreichbar sind und sich hierbei die Leistungsziffer mit fallender Temperatur der Umgebungswärme nur geringfügig verschlechtert.

Auch kann vorteilhaft an den Luftauslaß der Entspannungsturbine wenigstens ein von einem Kälteträger durchströmbarer dritter Wärmetauscher angeschlossen sein. Hierdurch ist die Anlage auf einfache Weise zur Erzeugung von Nutzkälte und/oder Nutzwärme einsetzbar.

Weitere Vorteile und empfehlenswerte Merkmale der Erfindung gehen aus der folgenden Beschreibung von Ausführungsbeispielen in Verbindung mit den schematischen Figuren hervor. Hierbei zeigen:

Fig. 1 eine Anlage zur Erzeugung von Nutzwärme mit einem Dampferzeuger und einer Gegendruckdampfturbine und einer Wärmepumpe mit geschlossenem Kreislauf,

Fig. 2 den Gegenstand der Fig. 1 mit einer Wärmepumpe mit offenem Kreislauf und

Fig. 3 eine Ausführungsvariante des Gegenstandes der Fig. 2 mit einer Gas-Turbine.

In den Zeichnungen sind gleiche Teile jeweils mit den gleichen Bezugszeichen versehen.

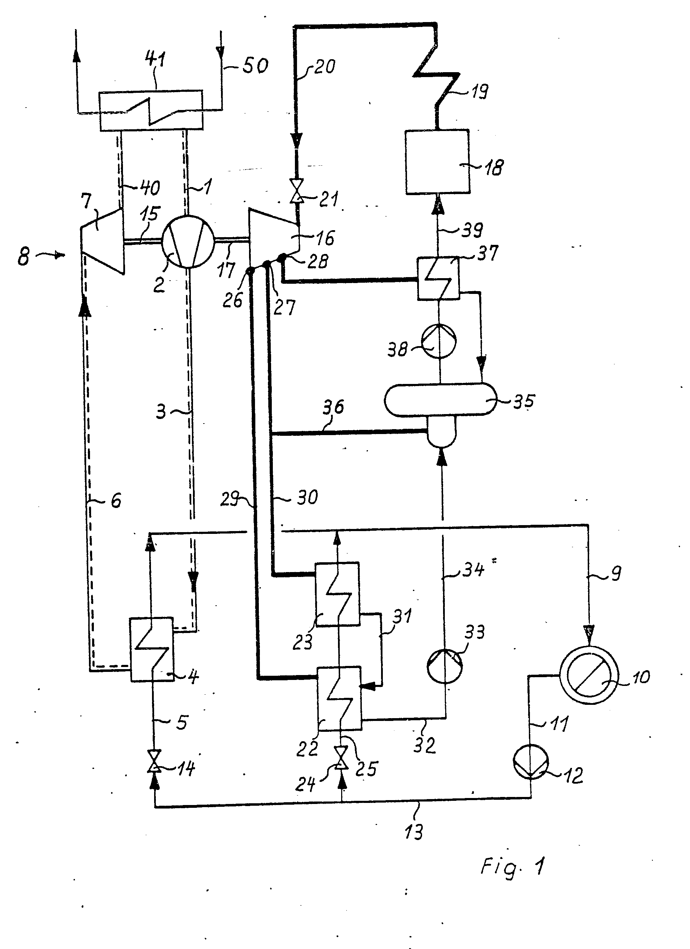

Nach dem Ausführungsbeispiel gemäß Fig. 1 wird das Arbeitsmedium der Wärmepumpe 8 über eine Ansaugleitung 1 dem Verdichter 2 zugeführt. In diesem Verdichter, der als Turboverdichter ausgebildet ist, wird das gasförmige Arbeitsmedium auf einen höheren durch die Auslegung der Anlage vorgegebenen Druck verdichtet, wobei sich das Arbeitsmedium erwärmt. Anschließend wird dieses über eine Leitung 3 dem ersten Wärmetauscher 4 zugeführt. In diesem erfolgt über Wärmeaustauschflächen der Wärmeaustausch zwischen dem Arbeitsmedium und dem kälteren, über die Leitung 5 in den ersten Wärmetauscher 4 eingeleiteten Wärmeträger. In den vorliegenden Ausführungsbeispielen ist als Wärmeträger Heizwasser vorgesehen, das mit vorgegebener Vorlauftemperatur über die Heizwasser-Vorlaufleitung 9 dem oder den Wärmeverbrauchern 10 zugeleitet wird. Das abgekühlte Heizwasser wird über die Leitung 11 und die Pumpe 12 in die Heizwasser- Rücklaufleitung 13 eingespeist. Über ein Ventil 14 oder ein Regelorgan kann eine vorgegebene Teilmenge des rücklaufenden Heizwassers geregelt und über die Leitung 5 dem ersten Wärmetauscher 4 zugeleitet werden.

Das im ersten Wärmetauscher 4 abgekühlte Arbeitsmedium wird über die Leitung 6 der Entspannungsturbine 7 zugeführt. Hier expandiert dieses und kühlt sich durch den Expansionsvorgang ab. Das abgekühlte und entspannte Arbeitsmedium wird über die Leitung 40 in den zweiten Wärmetauscher 41 eingeleitet. Hier wird dem Arbeitsmedium Umgebungswärme zugeführt z.B. durch Umgebungsluft, die über eine Leitung 50 dem zweiten Wärmetauscher 41 zugeführt wird. Die Umgebungsluft wird hierbei von einem nicht dargestellten Ventilator gefördert. Günstiger jedoch ist es, die Umgebungswärme einem zugeführten Kälteträger wie Wasser, Sole oder Kältemittel zu entziehen und den abgekühlten Kälteträger auszunutzen z.B. für die Klimatisierung oder gewerbliche Zwecke. Schließlich
wird das mit Umgebungswärme beladene Arbeitsmedium
durch die Ansaugleitung 1 abgeführt, so daß der Kreislauf der Wärmepumpe 8 geschlossen ist.

Die durch Expansion der Luft in der Entspannungsturbine 7 freigesetzte mechanische Energie wird zum
Antrieb des Verdichters 2 ausgenutzt. Aus diesem Grunde sind die Wellen von Verdichter und Entspannungsturbine über ein gemeinsames Wellenstück 15 mechanisch
miteinander verbunden.

Der Leistungsbedarf für den Antrieb des Verdichters 2
ist größer als die durch die Expansion der Luft in
der Entspannungsturbine 7 freigesetzte Leistung. Die
noch fehlende Antriebsleistung für den Verdichter 2
wird von der Turbine 16 aufgebracht, die im Ausführungsbeispiel gemäß Fig. 1 als Anzapf-Gegendruck-
Dampfturbine ausgebildet ist. Die Turbine 16 ist hier
über ein Wellenstück 17 mit dem Verdichter 2 mechanisch verbunden. Abweichend von diesen Darstellungen
könnte die Turbine 16 aber auch mit einem eigenen
Generator zur Stromerzeugung ausgerüstet sein und der
Antrieb der aus Verdichter 2 und Entspannungsturbine 7
bestehenden Maschinengruppe könnte über einen Elektromotor erfolgen, der vom Generator gespeist wird.

Der Arbeitsdampf der Turbine 16 wird in einem Dampferzeuger 18 durch Einsatz fossilen oder nuklearen
Brennstoffes gewonnen. Der Dampferzeuger 18 ist mit
einer Überhitzungseinrichtung 19 zur Überhitzung des
Arbeitsdampfes ausgerüstet. Der Arbeitsdampf wird über
die Frischdampfleitung 20 und das Turbinen-Einlaßventil 21 der Turbine 16 zugeführt.

Die Turbine 16 versorgt die Wärmetauscher 22 und 23 mit dem erforderlichen Abdampf und/oder Anzapfdampf zur Erwärmung eines Wärmeträger-Teilstromes, der der Heizwasser-Rücklaufleitung 13 entnommen und über das Absperr- und Regelorgan 24 und die Leitung 25 den wärmeträgerseitig hintereinandergeschalteten Wärmetauschern 22 und 23 zugeführt wird. Die Heizdampfdrücke an den Dampfentnahmestellen 26, 27 der Turbine sind dabei so gewählt, daß etwa gleichgroße Aufwärmspannen des Wärmeträgers in den Wärmetauschern 22 und 23 auftreten und die verlangte Vorlauftemperatur erreicht wird. Der erwärmte Teilstrom des Wärmeträgers wird dann in die gemeinsame Heizwasser-Vorlaufleitung 9 eingeleitet.

Die an der Turbine 16 vorgesehenen Entnahmestellen 26 und 27 für den Abdampf bzw. Anzapfdampf sind über Leitungen 29 und 30 mit den Wärmetauschern 22 und 23 verbunden. Das Dampfkondensat aus dem Wärmetauscher 23 wird über die Leitung 31 in den Dampfraum des unter geringerem Dampfdruck stehenden Wärmetauschers 22 eingeleitet und zusammen mit dem Kondensat des Wärmetauschers 22 über die Leitung 32, die Kondensatpumpe 33 und die Leitung 34 in den Entgaser-Mischvorwärmer 35 geleitet. Dieser wird über eine Heizdampfleitung 36 aus einer geeigneten Heizdampf-Entnahmestelle, z.B. Entnahmestelle 27, mit Heizdampf versorgt.

Eine weitere Entnahmestelle 28 ist zur Heizdampfversorgung eines Oberflächen-Speisewasservorwärmers 37 vorgesehen. Sinngemäß können auch mehrere speisewasserseitig hintereinandergeschaltete Speisewassererwärmer zur Anwendung kommen. Statt der dargestellten zweistufigen Heizwassererwärmung kann auch eine einstufige oder eine Heizwassererwärmung mit noch weiteren Stufen gewählt werden. Entgegen der Darstellung kann der Arbeitsdampf der Turbine nach Teileypansion zwischenüberhitzt werden, oder es kann auf die Überhitzung des Arbeitsdampfes ganz verzichtet werden. Die Einzelheiten der Kreislaufschaltung im Dampfteil der vorgeschlagenen Anlage können den jeweiligen Erfordernissen entsprechend abgewandelt werden.

Im vorliegenden Ausführungsbeispiel fördert die Speisepumpe 38 das Speisewasser über den Speisewasservorwärmer 37 und die Leitung 39 in den Dampferzeuger 18, womit der Wasser-Dampfkreislauf der Anlage geschlossen ist.

Die Anordnung der Turbine 16, des Verdichters 2 und der Entspannungsturbine 7 auf einer gemeinsamen im Leistungsgleichgewicht stehenden Welle 15 und 17 bietet die Möglichkeit einer verlustarmen Drehzahlregelung dieser Maschinengruppe.

Wie sich aus Vorstehendem ergibt, wird während des Betriebs der Anlage jeweils ein Teilstrom des Wärmeträgers der Heizwasser-Rücklaufleitung 13 entnommen, in den Wärmetauschern 22 und 23 sowie 4 erwärmt und der Heizwasser-Vorlaufleitung 9 zugeführt. Die für die Erwärmung benötigte Wärme wird hierbei dem Abdampf und/oder Anzapfdampf der Turbine 16 sowie der Wärmepumpe 8 entnommen. Da die Wärmepumpe 8 im wesentlichen von der Turbine 16 angetrieben wird, ist es mit der vorliegenden Anlage somit möglich, die thermodynamischen Vorteile der gekoppelten Energieerzeugung für die alleinige Erzeugung von thermischer Nutzenergie auszunutzen.

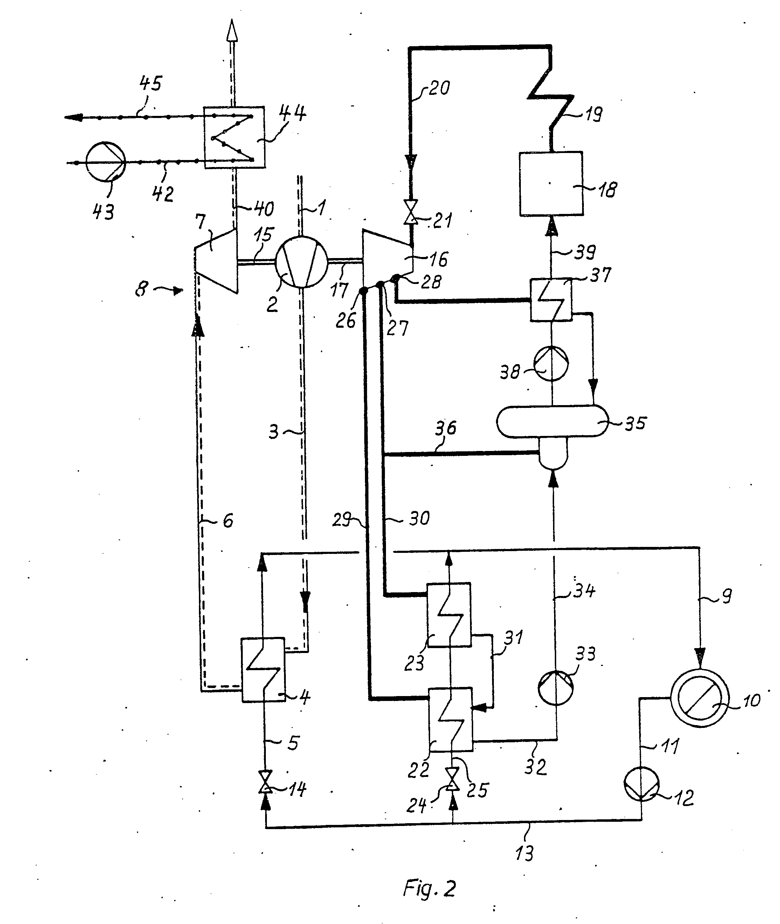

In Fig. 2 ist eine Ausführungsvariante der Anlage gemäß Fig. 1 dargestellt. Der Unterschied zwischen beiden Anlagen besteht darin, daß die Anlage nach Fig. 2 eine Wärmepumpe mit offenem Kreislauf für das Arbeitsmedium aufweist. Hierzu mündet die Ansaugleitung 1 in die Umgebung, es wird vom Verdichter 1 somit Umgebungsluft mit Umgebungsdruck und Umgebungstemperatur angesaugt. Dementsprechend mündet die Leitung 40, welche an den Luftauslaß der Entspannungsturbine 7 angeschlossen ist, in die Umgebung.

Hierbei ist in die Leitung 40 ein dritter Wärmetauscher 44 eingeschaltet, der von einem Kälteträger durchströmt wird. Der von den Kälteverbrauchern, z.B. Klimaanlagen, kommende erwärmte Kälteträger tritt über die Leitung 42 in den dritten Wärmetauscher 44 ein, wird hier unter Abgabe von Umgebungswärme abgekühlt und strömt über die Leitung 45 den Kälteverbrauchern zu. Eine Pumpe 43 hält hierbei die Zirkulation aufrecht. Als Kälteträger können die bereits erwähnten Fluide eingesetzt werden.

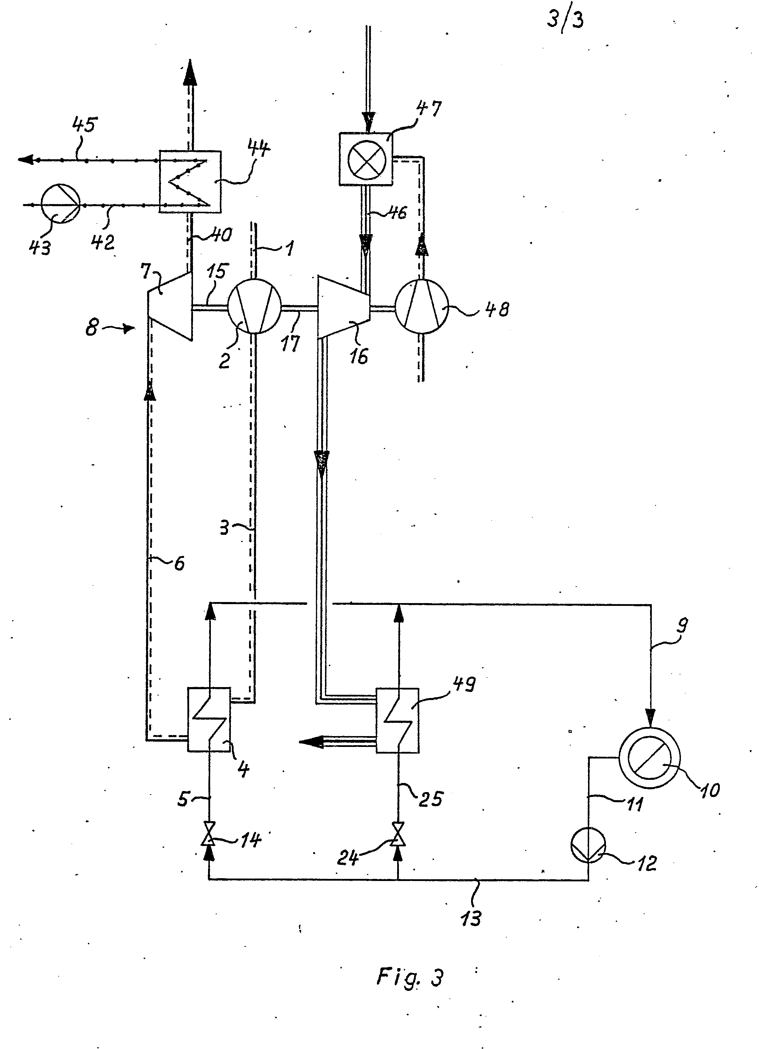

Figur 3 zeigt schließlich eine Ausführungsvariante der Anlage gemäß Fig. 2, wobei die Anlage nach Fig. 3 eine Gasturbine für die Erzeugung der mechanischen Energie aufweist.

Demnach ist als Turbine 16 eine Gasturbine eingesetzt, die über eine Leitung 46 mit Treibgas als Arbeitsmedium versorgt wird, welches in einer Brennkammer 47 erzeugt wird.

Die für die Verbrennung des Brennstoffes, wie Gas oder Öl, erforderliche Luft wird zusammen mit der zur Aufrechterhaltung der vorgegebenen Auslegungstemperatur des Arbeitsgases erforderlichen Sekundärluft in einen Turbokompressor 48 verdichtet und zusammen mit dem Brennstoff der Brennkammer 47 zugeführt. Der Turbokompressor 48 ist für den Antrieb an die Turbine 16 gekuppelt, so daß Verdichter 2, Entspannungsturbine 7, Turbine 16 und Turbokompressor 48 antriebsseitig miteinander verbunden sind.

Nach dem Austritt aus der Turbine 16 wird das entspannte Treibgas dem Wärmetauscher 49 zugeführt, der wie die Wärmetauscher 22, 23 im Ausführungsbeispiel gemäß Fig. 1 oder 2 vom Wärmeträger beaufschlagt wird.

Der Hauptvorteil der erfindungsgemäßen Anlagen liegt vor allem in der Verringerung des Primärenergieeinsatzes bei der Nutzwärmeversorgung gegenüber bekannten Heizwerken oder gegenüber Einzelfeuerungen und in der Vermeidung der Nachteile von bekannten Heizkraftwerken.

Der Vorteil des geringeren Primärenergieeinsatzes gegenüber bekannten Heizwerken oder Einzelfeuerungen soll anhand des Ausführungsbeispiels gemäß Fig. 2 durch Aufstellung der äußeren Wärmebilanz nachgewiesen werden:

Für die als Wärmepumpe wirkende Maschinengruppe mit
Verdichter 2 und Entspannungsturbine 7 gelte die
Leistungsziffer:

$$\varepsilon_{WP} = \frac{\text{nutzbar abgegebene Wärme}}{\text{erforderliche Antriebsleistung}}$$

$$= \frac{Q_{H}(WP)}{P_{WP}}$$

Hierin ist $Q_{H(WP)}$ $[KJ/S]$ ; die im ersten Wärmetauscher
　　　　　　　　　　　　　4 nutzbar an das Heizwasser
　　　　　　　　　　　　　übertragene Wärme

$Q_{WP}$ $[KW]$　　　; die Leistungsaufnahme der
　　　　　　　　　　　Wärmepumpe

Die Leistungskennziffer der Dampf-Turbine 16 ist:

$$\vartheta_{DT} = \frac{P_{DT}}{Q_{H(DT)}}$$

Hierin bedeuten $Q_{H(DT)}$ $[KJ/S]$ ; die in den dampfbeheizten Wärmetauschern
　　　　　　　　　　　　　　　　22 und 23 nutzbar an
　　　　　　　　　　　　　　　　das Heizwasser übertragene Wärme

$P_{DT}$ $[KW]$　　　; die Leistungsabgabe
　　　　　　　　　　　　der Dampfturbine

0000135

1.6.1978 — 14 — 578/77

Die erforderliche Brennstoffwärme, die dem Dampferzeuger 18 zuzuführen ist, errechnet sich aus:

$$Q_{BR} = \frac{1}{\eta_{DE}} \left[ Q_{H(DT)} + P_{DT} \right] [KJ/S]$$

Hierin ist $Q_{BR}$ $[KJ/S]$ ; die dem Dampferzeuger zuzuführende Brennstoffwärme

$\eta_{DE}$ $[-]$ ; der Wirkungsgrad des
Dampferzeugers

Bei Vernachlässigung geringfügiger sonstiger äußerer
Verluste gilt:

Leistungsabgabe der Dampf-Turbine = Leistungsaufnahme der
Wärmepumpe

$$P_{DT} = Q_{WP}$$

gesamte Heizleistung $Q_H$ = im ersten Wärmetauscher 4 nutzbar an das
Heizwasser übertragene
Wärme
plus
in den Wärmetauschern
22 und 23 nutzbar an
das Heizwasser übertragene Wärme

bzw.

$$Q_H = Q_{H\,(WP)} + Q_{H\,(DT)} \qquad [KJ/S]$$

Führt man den Brennstoffausnutzungsfaktor

$$\beta = \frac{Q_H}{Q_{BR}} \quad [-]$$

als dimensionslose Kenngröße ein, so ergibt sich mit den vorher definierten Größen für das Ausführungsbeispiel gemäß Fig. 1 die Beziehung:

$$\beta = \eta_{DE} \cdot \frac{[1 + \varepsilon_{WP} \; \vartheta'_{DT}]}{[1 + \vartheta_{DT}]} \quad [-]$$

Für ein Heizwerk gemäß dem Stand der Technik ist sinngemäß der Brennstoffausnutzungsfaktor

$$\beta_{HW} = \eta_{HW}$$

Hierin bedeuten

$\eta_{HW}$ [-] ; der Wirkungsgrad der Wärmeübertragung vom Brennstoff an das Heizwasser, z.B. in einem Heißwasser-Kessel

1.6.1978     - 16 -     578/77

Das Verhältnis der Brennstoffausnutzungsfaktoren ist ein Maß für die mögliche Verringerung des Primärenergieeinsatzes einer Anlage gemäß der Erfindung gegenüber einer Heizwärmeversorgung mit bekannten Heizwerken.

$$\frac{\beta}{\beta_{HW}} = \frac{\eta_{DE}}{\eta_{HW}} \cdot \frac{[1 + \varepsilon_{WP} \cdot \delta_{DT}]}{[1 + \delta_{DT}]} \quad [-]$$

Setzt man vereinfachend

$$\eta_{DE} = \eta_{HW}$$

und setzt man in obige Beziehung realisierbare Werte, z.B.

$$\varepsilon_{WP} = 2$$

$$\delta_{DT} = 0,5$$

ein, so ergibt sich der Zahlenwert für dieses Beispiel mit

$$\frac{\beta}{\beta_{HW}} = 1,33$$

Das heißt, der Aufwand an Primärenergie ist bei einer Anlage gemäß der Erfindung wesentlich geringer als bei bekannten Heizwerken.

Bei Einzelfeuerung kann mit einem durchschnittlichen
Wirkungsgrad der Wärmeübertragung an das Heizwasser
von günstigstenfalls etwa

$$\eta_{EF} = 0,7 \quad [-]$$

gerechnet werden.

Unterstellt man einen Dampferzeugerwirkungsgrad von

$$\eta_{DE} = 0,9 \quad [-]$$

so ist das Verhältnis der Brennstoffausnutzungsfaktoren einer Anlage nach der Erfindung gegenüber der
Heizwärmeversorgung mit Einzelfeuerung:

$$\frac{\beta}{\beta_{EF}} = \frac{\eta_{DE}}{\eta_{EF}} \cdot \frac{[1 + \varepsilon_{WP} \cdot \delta_{DT}]}{[1 + \delta_{DT}]} \quad [-]$$

oder mit den entsprechenden Zahlenwerten:

$$\frac{\beta}{\beta_{EF}} = 1,71$$

Damit ist der quantitative Nachweis der möglichen Brennstoffeinsparung der erfindungsgemäßen Anlagen gegenüber konkurrierenden bekannten Verfahren der Heizwärmeversorgung erbracht.

Darüber hinaus ergeben sich weitere Vorteile durch Ausnutzung der kalten Seite der Wärmepumpe zu Kühlzwecken.

0000135

Mp.-Nr. 578/77

1. Juni 1978
ZFE/P 1, Wg/Hz

## Ansprüche:

1. Anlage zur zentralen Erzeugung von thermischer Nutzenergie für die Fernversorgung von Verbrauchern mit mindestens einer Turbine (16), insbesondere einer Gegendruckdampfturbine, der mindestens ein Wärmetauscher (22, 23, 49) zur Abgabe von Nutzwärme an wenigstens einen Wärmeträger nachgeschaltet ist, dadurch gekennzeichnet, daß die Turbine (16) als Antrieb des Verdichters (2) wenigstens einer die Umgebungswärme auf ein höheres Temperaturniveau anhebenden und als Nutzwärme an den Wärmeträger abgebenden Wärmepumpe (8) ausgebildet ist.

2. Anlage nach Anspruch 1, dadurch gekennzeichnet, daß die Wärmepumpe (8) eine Entspannungsturbine (7) aufweist, die an den als Turboverdichter ausgebildeten Verdichter (2) gekuppelt ist und die über mindestens einen die Verdichtungswärme an den Wärmeträger abgebenden ersten Wärmetauscher (4) an die Druckseite des Verdichters (2) angeschlossen ist.

3. Anlage nach Anspruch 2, dadurch gekennzeichnet, daß die Wärmepumpe (8) einen geschlossenen Kreislauf für das Arbeitsmedium aufweist mit wenigstens einem zwischen Entspannungsturbine (7) und Verdichter (2) in den Kreislauf eingeschalteten zweiten Wärmetauscher (41) für die Zufuhr von Umgebungswärme. (Fig. 1)

4. Anlage nach Anspruch 3, dadurch gekennzeichnet, daß der zweite Wärmetauscher (41) für die Zufuhr von Umgebungswärme von einem Kälteträger durchströmbar ist.

5. Anlage nach Anspruch 2, dadurch gekennzeichnet, daß die Wärmepumpe (8) einen offenen Kreislauf für das Arbeitsmedium aufweist, wobei der Verdichter (2) für die Ansaugung von Umgebungsluft ausgebildet ist und der Luftauslaß der Entspannungsturbine (7) in die Umgebung mündet. (Fig. 2)

6. Anlage nach Anspruch 5, dadurch gekennzeichnet, daß an den Luftauslaß der Entspannungsturbine (7) wenigstens ein von einem Kälteträger durchströmbarer dritter Wärmetauscher (44) angeschlossen ist.

7. Anlage nach einem der Ansprüche 1 bis 6, dadurch gekennzeichnet, daß die Drehzahl der Turbine (16) regelbar ist.

Fig. 1

Fig. 2

*Fig. 3*

Europäisches Patentamt

# EUROPÄISCHER RECHERCHENBERICHT

Nummer der Anmeldung

**0000135**

EP 78 10 0136

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>FR - A - 2 245 920</u> (COTTIN)<br>* Figuren; Seite 1, Zeile 15 bis Seite 2, Zeile 9 * | 1-6 |
| X | <u>DE - A - 2 553 024</u> (BBC)<br>* Figuren; Seite 4, Absatz 2; Seite 7, Absatz 1 bis Seite 8, Absatz 1 * | 1,2,5 |
| | <u>DE - A - 2 545 609</u> (BBC-Y.)<br>* Figur 1; Seite 7, Absatz 2 bis Seite 8, Absatz 1 * | 1,3,4 |
| | <u>US - A - 2 219 815</u> (CARRIER)<br>* Figuren; Spalte 1, Zeilen 18 bis 31 * | 1 |
| | <u>US - A - 2 721 728</u> (HIGGINS)<br>* Figuren; Spalte 1, Zeile 61 bis Spalte 2, Zeile 20 * | 1 |
| | <u>CH - A - 304 499</u> (MELAW)<br>* Figuren 1,2; Seite 1, Zeilen 32 bis 41 * | 1,5 |
| | <u>DE - A - 2 532 850</u> (BBC)<br>* Figur 1; Seite 6, Absatz 3 bis Seite 7, Absatz 2 * | 2,3 |

### KLASSIFIKATION DER ANMELDUNG (Int.Cl.²)

F 24 J 3/04
F 24 D 11/02
F 01 K 17/00
F 02 C 7/34

### RECHERCHIERTE SACHGEBIETE (Int. Cl.²)

F 24 J 3/04
F 24 D 11/02
F 25 B 29/00
F 02 C 7/02
F 02 C 7/34
F 02 C 1/00
F 01 K 17/00
F 01 K 17/02
F 01 K 23/02
F 01 K 23/12
F 01 K 23/16
F 01 K 23/18

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-08-1978 | KOVAC |